# EUROPEAN PATENT SPECIFICATION

(11) **EP 1 494 523 B1**
(45) Date of publication and mention of the grant of the patent: **15.10.2008**
(21) Application number: 03744964.2
(22) Date of filing: 26.02.2003
(51) Int. Cl.: A01G 9/02

(54) **CONTAINER AND METHODS USING IT**
BEHÄLTER UND IHN VERWENDENDE VERFAHREN
RECIPIENT ET SES PROCEDES D'UTILISATION

(30) Priority: 21.03.2002 IL 14883502
(43) Date of publication of application: 12.01.2005
(73) Proprietor: Winter, Aharon, Kfar Mimon 85153 (IL)
(72) Inventor: Winter, Aharon, Kfar Mimon 85153 (IL)
(74) Representative: Casey, Lindsay Joseph
(86) International application number: PCT/IL2003/000147
(87) International publication number: WO 2003/079762

(56) References cited:
- EP-A- 0 852 110
- FR-A- 1 311 985
- GB-A- 1 205 459
- GB-A- 2 243 524
- US-A- 2 404 370
- US-A- 4 813 177

## Description

### FIELD OF THE INVENTION

This invention relates to a specially structured container and to methods which may be carried out using it.

### BACKGROUND OF THE INVENTION

Containers are used for storing liquids and solids. Containers generally have a horizontal bottom on which they are positioned. The liquids or solids that gather in such containers accumulate in layers parallel to the bottom of the container. In the event that it is desired to remove a liquid or solid from the bottom of the container, such removal is made difficult since the substance to be removed is not collected in one place.

Taking a homogeneous sample of the liquid gathered in such a container is practically inconvenient and messy. Addition of gases or liquids to the liquid in the container may hardly be done homogeneously.

Detached substrate or hothouse agriculture has become very popular. The plants are grown in containers which are detached from the ground and contain suitable substrates for growth. These containers generally have outlet ports at or near the bottom of the container to allow irrigation of the growing plant and drainage of waste matter and accumulated liquids from the container. In general, the waste matter and superfluous salts accumulate in the upper portion of the substrate. Addition of irrigation fluids from the upper opening of the container results in the waste matter being washed from the upper portion to the lower portion of the substrate, which is the location of the roots of the plant.

French Patent No. 2,644,977 discloses a growing pot having a bottom which slopes at an angle of approximately 7 degrees and a slot in the wall of the pot. The bottom has a ridge to ensure adequate drainage through the slots. The growth pot fits inside a sale pot and stands on a rib.

British Patent Specification no GB-A- 2 243 524 discloses a plant container comprising a dished vessel intended to hold growing medium and plants. The vessel is supported on a central column which has stability means. The vessel has an outer peripheral rim which is rounded and extends inwardly to overlie marginally the medium receiving portion of the vessel. The bottom of the vessel tapers upwards from the centre of the bottom towards the rim. The column is of height to allow a person in a wheelchair to be positioned with the lower part of the body and part of the chair under the overhang of the vessel.

### SUMMARY OF THE INVENTION

According to an aspect of the present invention, there is provided a container as specified in claim 1.

It is an object of the present invention to provide a container having a sloping bottom.

It is another object of the invention to provide a method which utilizes such a container.

In a first aspect of the invention, there is provided a container comprising an interior bottom wall and a sidewall contiguous thereto, and a positioner which enables the container to be positioned substantially perpendicular to a horizontal surface. The interior bottom wall is inclined, and forms a junction with the sidewall. The section of the sidewall above the junction has no outlet so that the sidewall and the interior bottom wall form an enclosed space capable of holding a liquid.

The term "*enclosed space*" in this specification means a space enclosed on all sides by the sidewall and having an inclined bottom wall which is contiguous with the sidewall on all sides, thereby forming a junction.

The container of the invention provides a novel combination of features, which include, but are not limited to: (1) an inclined bottom wall; (2) positioning of the container perpendicular to a horizontal surface; and (3) lack of an outlet in the sidewall adjacent the bottom of the container so that liquids can accumulate therein. The container may be of any shape such as, for example, round, square, rectangular and elliptical, so that there may be one or more sidewalls.

The inclination of the bottom wall results in the bottom wall forming an acute angle between the lower end of the bottom wall and the horizontal surface. In a preferred embodiment, this acute angle is in the range of 1 ° to 20°. In a preferred embodiment, the inclined bottom wall forms a single plane. However, other possibilities exist such as a plurality of joined planes, such as in a U, V or W conformation. The inclination of the bottom wall allows liquids to collect at one location at the bottom of the container. In this way, the liquids which collect at the bottom of the container can be easily removed and/or tested for various parameters such as salt content, acidity, concentration of various additives, pathogenicity, etc.

The positioner may be any means which enables the container (or the vertical axis thereof) to be positioned substantially perpendicular to a substantially horizontal surface. In a preferred embodiment, the container has a double bottom, with an inclined interior bottom wall and a horizontal exterior bottom wall positioned below the interior bottom wall. One or more ribs extending between the interior and exterior bottom walls may support the interior bottom wall. In another embodiment, one or more vertical ribs are positioned under the interior bottom wall. The height of the ribs varies so as to raise the higher end of the interior bottom wall above the lower end thereof. All of the ribs end on one horizontal plane so that the container stands perpendicularly to the surface.

Other embodiments of a positioner include hanging the container from above, and placing it within an external supporting device. The skilled man of the art will be capable of contemplating numerous other embodiments according to the invention.

A feed tube or funnel may be used to dispense substances into the collected liquid at the bottom of the container (or at any other location in the container) or to remove substances therefrom. In this way, waste matter found in the upper portion of the container is not transferred to the lower portion of the container. Examples of substances which may be conveyed to the bottom portion of the container include irrigation fluid, gases, liquid or solid fertilizer, pesticides, coloring materials, powders, particulate material, etc. In addition, an electric wire may be inserted in order to adjust the temperature of the material at the bottom of the container or as a sensing device.

As stated above, the section of the sidewall adjacent the bottom of the container has no outlet. The height of the section depends on the size of the container and the amount of liquid that is desired to be retained therein. In a preferred embodiment, this section is 3-5 cm. above the junction of the higher end of the interior bottom wall and the sidewall. One or more apertures may exist in any of the sidewalls of the container above that section. The apertures may be vertically aligned above the section. That is, the apertures are positioned one above the other. Alternatively, they may be positioned at various locations in the sidewall(s), all above the section. The plurality of apertures may be plugged or unplugged as desired in order to control the liquid level in the container or to keep the surface of the sidewall above the aperture dry. Alternatively, a tube may be attached to each aperture to allow egress or influx of liquids.

The container of the invention has numerous applications which are facilitated by using the container. These include but are not limited to:
(a) a method for concentrating a liquid at the bottom of a container comprising adding the liquid to a container according to the invention and allowing the liquid to concentrate at the bottom of the container.
(b) a method of precipitating a solid out of a suspension comprising adding the suspension to a container according to the invention and allowing the solid to precipitate to the bottom of the container.
(c) a method of separating a mixture of liquids of differing densities into the individual liquids and removing the separated liquids comprising adding the mixture to a container according to the invention, allowing the individual liquids to separate, and removing the bottom-most liquid.
(d) a method for retaining a predetermined amount of liquid at the bottom of a container comprising adding the liquid to a container according to the invention and allowing the overflow to exit through one or more of the apertures.
(e) a method as in (d) wherein the container contains a detached substrate.
(f) a method as in (d) further comprising the step of inserting a feed tube into the liquid at the bottom of the container. The feed tube may be in the form of a funnel having a conically shaped mouth. Fasteners may be attached to the edge of the funnel mouth to hold an irrigation line which can drip irrigation fluid into the bottom of the container through the funnel.

A preferred method of the invention for growing a plant in a detached substrate comprising inserting a detached substrate into a container according to the invention, planting the plant in the substrate and providing conditions for the growth of the plant.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** is a sectional side view of one embodiment of a container in accordance with the invention;
**Figs. 2, 3** and **4** show further embodiments of positioners of the container;
**Fig. 5** is a sectional side view of another embodiment of a container having apertures; and
**Fig. 6** is sectional side view of the container in which a feed tube has been inserted.

### DETAILED DESCRIPTION OF THE INVENTION

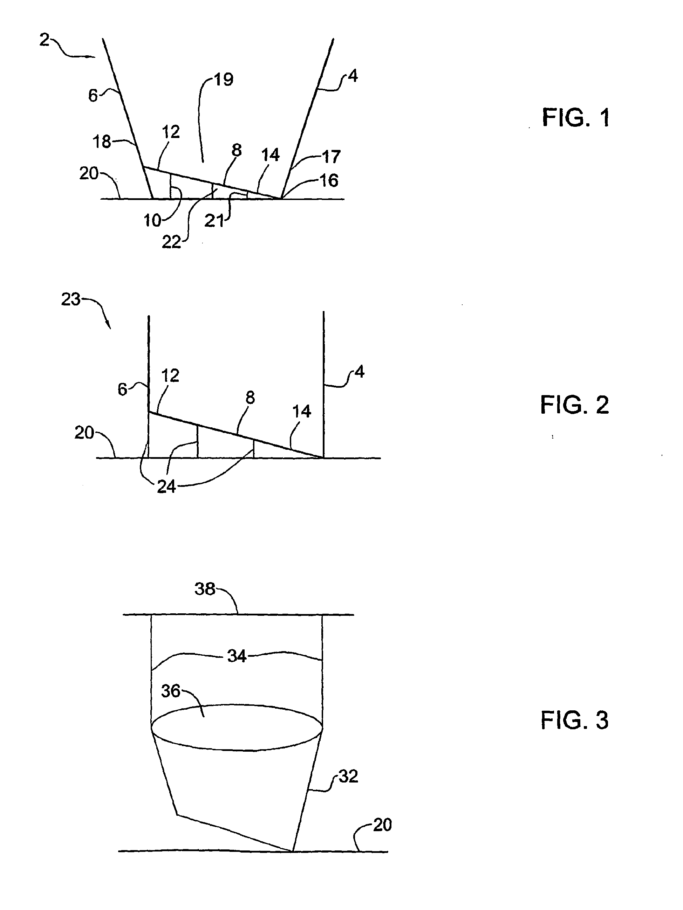

One embodiment of a container according to the invention may be understood with reference to Fig. 1, which shows a container 2 which comprises a first sidewall 4, a second sidewall 6, an inclined interior bottom wall 8 within the container and a horizontal exterior bottom wall 10 on the outer surface of the container. In the event that the container is round, the first and second sidewalls belong to one and the same sidewall. The interior bottom wall 8 is inclined towards the first sidewall 4 so that the interior bottom wall has a higher end 12 adjacent the second sidewall 6 and a lower end 14 adjacent the first side wall. The lower end 14 of the interior bottom wall 8 and the lower section of the first sidewall 4 form a junction 16. The lower section 17 of the first sidewall 4 immediately above the junction 16, as well as the corresponding sections of any additional sidewalls of the container, such as the lower section 18 of the second sidewall 6 above the higher end 12 of the interior bottom wall, have no outlets so that liquids can accumulate in the bottom of the container. The lower sections together with the interior bottom wall form an enclosed space 19 above the interior bottom wall.

The exterior bottom wall 10 acts as a positioner to enable the container to be positioned substantially perpendicular to a horizontal surface 20. The interior bottom wall 8 forms an acute angle 21 with the exterior bottom wall at the junction 16 with the sidewall. The interior bottom wall is supported by ribs 22 extending between it and the exterior bottom wall. Other embodiments of a positioner are shown in Figs. 2, 3 and 4.

In Fig. 2, the container 23 has an inclined interior bottom wall 8, but no separate exterior bottom wall. The sidewalls 4 & 6 are positioned perpendicular to a horizontal surface 20 by a series of vertical ribs 24 which are positioned under the interior bottom wall 8 and support it. The heights of the ribs 24 increase progressively so that the rib under the higher end 12 of the interior bottom wall is higher than the rib under the lower end 14 of the bottom wall. Thus, the ribs raise the higher end of the interior bottom wall above the lower end of the wall, providing an inclination to the bottom wall while positioning the container substantially perpendicular to the horizontal surface 20.

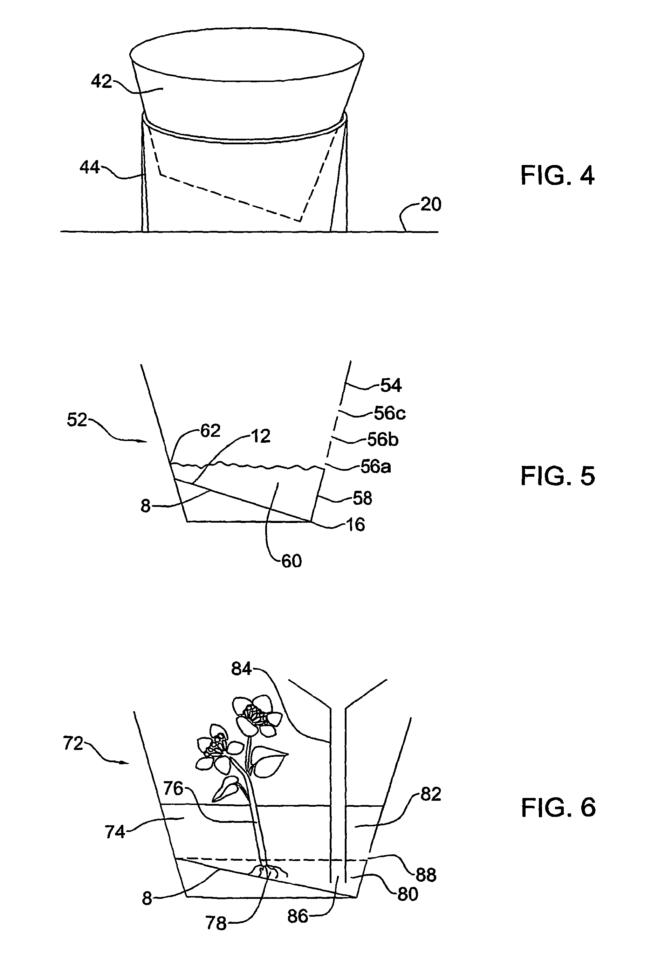

In Fig. 3, the container 32 is positioned perpendicular to the horizontal surface 20 by a plurality of hanging means 34 such as strings, ropes or chains which are attached to the edges of the mouth 36 of the container. The unattached ends of the hanging means are connected to a horizontal overhead structure 38 above the container so that the container hangs from the overhead structure in a position substantially perpendicular to the horizontal surface 20. In Fig. 4, the container 42 is supported in a position substantially perpendicular to the horizontal surface 20 by being placed within an external supporting device 44 which holds the container in the desired position.

In another embodiment of the invention illustrated in Fig. 5, the container 52 has a sidewall 54 which meets the interior bottom wall 8 at a junction 16, as described above. In this embodiment, the sidewall comprises a series of apertures 56a, 56b, 56c in the sidewall above the section 58 of the sidewall 54 immediately above the junction 16. In the illustrated embodiment, the apertures are positioned one above the other in a vertical straight line. However, it is also contemplated that the apertures may be placed each on a different sidewall or on the same sidewall but not in a straight vertical line but rather, for example, in a staggered or alternating pattern. What is required is that the apertures are of varying heights, and all of them are above the lower section of the sidewall. Of course, it is also possible that the sidewall has but one aperture.

The purpose of the apertures is to control the level of the liquid in the container. In Fig. 5, the liquid 60 is at a level 62 which is just under the lower aperture 56a, and several cms. above the higher end 12 of the bottom wall 8. Any additional liquid added to the container 52 will cause liquid to flow out of the aperture 56a, so that the level of the liquid will be maintained. The liquid level may be controlled by plugging or unplugging the apertures as will be understood by the skilled man of the art.

In the embodiment illustrated in Fig. 6, the container 72 contains a detached plant growing substrate 74 in which a plant 76 is growing. The roots 78 of the plant extend in the lower portion of the substrate 80 while the upper portion 82 (above the dotted line) contains waste matter and salts. A feed tube 84 may be inserted into the substrate so that its lower port 86 is submerged in the lower portion 80 of the substrate, thereby bypassing the waste matter in the upper portion. The feed tube may be used to convey substances such as liquid fertilizer directly to the roots of the plant. An aperture 88 in the sidewall of the container controls the level of liquids in the container, as explained above. Other devices may be inserted into the substrate to measure various parameters or to heat the substrate.

## Claims

1. A container (2, 52) comprising an interior bottom wall (8) and a sidewall (4, 54) contiguous thereto, and a positioner (10) which enables the container (2) to be positioned substantially perpendicular to a horizontal surface (20), said interior bottom wall (8) being inclined, said interior bottom wall (8) forming a junction (116) with said sidewall (4),
wherein a section (17) of said sidewall (4, 54) above the junction (16) has no outlet so that said sidewall (4, 54) and said interior bottom wall (8) form an enclosed space capable of holding a liquid,
**characterised in that** said sidewall (54) comprises at least one aperture (56a) above said section (58).

2. A container (2, 52) according to Claim 1 wherein said positioner (10) consists of a horizontal exterior bottom wall (20) positioned below said interior bottom wall (8).

3. A container (2, 52) according to Claim 1 wherein said positioner (10) consists of one or more vertical ribs (22) positioned under said interior bottom wall (8) and said interior bottom wall (8) comprises a higher (12) end and a lower end (14), wherein said ribs (22) raise the higher end (12) of said interior bottom wall (8) above the lower end (14) thereof.

4. A container (2, 52) according to any one of Claims 1. to 3 wherein said sidewall (4) comprises one or more walls.

5. A container (2, 52) according to claims 3 or claim 4 wherein said section (17) is above the junction (16) of the higher end (12) of said interior bottom wall (8) and said sidewall (4, 54).

6. A container (2, 52) according to any one of Claims 1 to 5 wherein said sidewall (4) comprises a plurality of apertures (56a, 56b, 56c) which are vertically aligned above said section (58).

7. A container (2, 52) according to any one of Claims 1 to 6 wherein said interior bottom wall (8) comprises a plurality of joined planes.

8. A container (2, 52) according to claim 7 wherein the interior bottom wall (8) has a U, V or W comformation.

9. A method lor growing a plant in a detached substrate comprising inserting a detached substrate into a container (2, 52) according to any one of Claims 1 to 8, planting said plant in the substrate and providing conditions for the growth of said plant.

10. A method according to Claim 9 further comprising the step of inserting a feed tube (84) into said liquid at the bottom of the container (2, 52).

## Patentansprüche

1. Behälter (2, 52), der eine innere Bodenwand (8) und eine daran angrenzende Seitenwand (4,54), sowie eine Positioniereinrichtung (10) aufweist, die Positionieren des Behälters (2) im Wesentlichen senkrecht zu einer horizontalen Oberfläche (20) ermöglicht, wobei die innere Bodenwand (8) geneigt ist, und die innere Bodenwand (8) eine Verbindungsstelle (116) mit der Seitenwand (4) bildet,
wobei ein Abschnitt (17) der Seitenwand (4, 54) über der Verbindungsstelle (16) keinen Auslass aufweist, so dass die Seitenwand (4, 54) und die innere Bodenwand (8) einen umschlossenen Raum bilden, der eine Flüssigkeit halten kann,
**dadurch gekennzeichnet, dass** die Seitenwand (54) wenigstens eine Öffnung (56a) über dem Abschnitt (58) aufweist.

2. Behälter (2, 52) nach Anspruch 1, bei dem die Positioniereinrichtung (10) aus einer horizontalen äußeren Bodenwand (20) besteht, die unter der inneren Bodenwand (8) positioniert ist.

3. Behälter (2, 52) nach Anspruch 1, bei dem die Positioniereinrichtung (10) aus einer oder mehreren vertikalen Rippen (22) besteht, die unter der inneren Bodenwand (8) positioniert sind, und die innere Bodenwand (8) ein höheres (12) Ende und ein niedrigeres Ende (14) aufweist, wobei die Rippen (22) das höhere Ende (12) der inneren Bodenwand (8) über das untere Ende (14) derselben anheben.

4. Behälter (2, 52) nach einem der Ansprüche 1 bis 3, bei dem die Seitenwand (4) eine oder mehr Wände aufweist.

5. Behälter (2, 52) nach Anspruch 3 oder Anspruch 4, bei dem sich der Abschnitt (17) über der Verbindungsstelle (16) des höheren Endes (12) der inneren Bodenwand (8) und der Seitenwand (4, 54) befindet.

6. Behälter (2, 52) nach einem der Ansprüche 1 bis 5, bei dem die Seitenwand (4) eine Mehrzahl von Öffnungen (56a, 56b, 56c) aufweist, die vertikal über dem Abschnitt (58) ausgerichtet sind.

7. Behälter (2, 52) nach einem der Ansprüche 1 bis 6, bei dem die innere Bodenwand (8) eine Mehrzahl verbundener Ebenen aufweist.

8. Behälter (2, 52) nach Anspruch 7, bei dem die innere Bodenwand (8) eine U-, V- oder W-Gestalt aufweist.

9. Verfahren zum Aufziehen einer Pflanze in einem allein stehenden Substrat, das Folgendes umfasst: Einführen eines allein stehenden Substrats in einen Behälter (2, 52) nach einem der Ansprüche 1 bis 8, Einpflanzen der Pflanze in das Substrat und Schaffen von Bedingungen zur Aufzucht dieser Pflanze.

10. Verfahren nach Anspruch 9, das weiter den Schritt aufweist, ein Zulaufrohr (84) in die Flüssigkeit am Boden des Behälters (2, 52) einzuführen.

## Revendications

1. Récipient (2, 52) comportant une paroi inférieure intérieure (8) et une paroi latérale (4, 54) contiguë par rapport à celle-ci, et un positionneur (10) qui permet au récipient (2) d'être positionné dans une large mesure de manière perpendiculaire par rapport à une surface horizontale (20), ladite paroi inférieure intérieure (8) étant inclinée, ladite paroi inférieure intérieure (8) formant une jonction (116) avec ladite paroi latérale (4),
dans lequel une section (17) de ladite paroi latérale (4, 54) au-dessus de la jonction (16) n'a aucune sortie de telle manière que ladite paroi latérale (4, 54) et ladite paroi inférieure intérieure (8) forment un espace clos capable de contenir un liquide,
**caractérisé en ce que** ladite paroi latérale (54) comporte au moins une ouverture (56a) au-dessus de ladite section (58).

2. Récipient (2, 52) selon la revendication 1, dans lequel ledit positionneur (10) consiste en une paroi inférieure extérieure horizontale (20) positionnée en dessous de ladite paroi inférieure intérieure (8).

3. Récipient (2, 52) selon la revendication 1, dans lequel ledit positionneur (10) consiste en une ou plusieurs nervures verticales (22) positionnées sous ladite paroi inférieure intérieure (8) et ladite paroi inférieure intérieure (8) comporte une extrémité supérieure (12) et une extrémité inférieure (14), dans lequel lesdites nervures (22) élèvent l'extrémité supérieure (12) de ladite paroi inférieure intérieure (8) au-dessus de l'extrémité inférieure (14) de celle-ci.

4. Récipient (2, 52) selon l'une quelconque des revendications 1 à 3, dans lequel ladite paroi latérale (4) comporte une ou plusieurs parois.

5. Récipient (2, 52) selon la revendication 3 ou la revendication 4, dans lequel ladite section (17) est au-dessus de la jonction (16) de l'extrémité supérieure (12) de ladite paroi inférieure intérieure (8) et de ladite paroi latérale (4, 54).

6. Récipient (2, 52) selon l'une quelconque des revendications 1 à 5, dans lequel ladite paroi latérale (4) comporte une pluralité d'ouvertures (56a, 56b, 56c) qui sont alignées de manière verticale au-dessus de ladite section (58).

7. Récipient (2, 52) selon l'une quelconque des revendications 1 à 6, dans lequel ladite paroi inférieure intérieure (8) comporte une pluralité de plans joints.

8. Récipient (2, 52) selon la revendication 7, dans lequel la paroi inférieure intérieure (8) a une conformation en U, en V ou en W.

9. Procédé permettant de faire pousser une plante dans un substrat détaché comportant l'insertion d'un substrat détaché dans un récipient (2, 52) selon l'une quelconque des revendications 1 à 8, la plantation de ladite plante dans le substrat et la mise en oeuvre de conditions pour la pousse de ladite plante.

10. Procédé selon la revendication 9, comportant par ailleurs l'étape consistant à insérer un tube d'alimentation (84) dans ledit liquide au fond du récipient (2, 52).
